Europäisches Patentamt

European Patent Office

Office européen des brevets

(19)

(11) Veröffentlichungsnummer: **0 361 154**

**A2**

(12) # EUROPÄISCHE PATENTANMELDUNG

(21) Anmeldenummer: **89116465.9**

(22) Anmeldetag: **06.09.89**

(51) Int. Cl.5: **G01D 5/242 , H02K 1/27**

(30) Priorität: **30.09.88 DE 3833348**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **Hübner Elektromaschinen AG**
**Planufer 92b**
**D-1000 Berlin 61(DE)**

(72) Erfinder: **Jakob, Peter**
**Angerburger Allee 53**
**D-1000 Berlin 19(DE)**
Erfinder: **Doege, Günter**
**Themsestrasse 78**
**D-1000 Berlin 65(DE)**

(74) Vertreter: **Weber, Otto Ernst, Dipl.-Phys. et al**
**Weber & Heim Hofbrunnstrasse 36**
**D-8000 München 71(DE)**

(54) **Rotor für eine bürstenlose Induktionsmaschine.**

(57) Der Rotor einer n-poligen Induktionsmaschine (n = 2, 4, 6, ...) besteht aus einem m x n-Kant (m = 2, 3,4, ...). Für jeden der n-Pole (15 bis 20) werden jeweils m-radial polarisierte Permanentmagnete (13, 14) mit gleicher Polaritätsrichtung auf dem Polrad aufgebracht und über einen gemeinsamen Polschuh verbunden. Bei einem bevorzugten Beispiel für einen 6-poligen Rotor (n = 6) werden pro Pol jeweils zwei Magnete (m = 2) gleicher Polaritätsrichtung auf einen 12-Kant aufgebracht. Die Polschuhe werden bevorzugt durch einen Eisenring gebildet, der zwischen den einzelnen Polen durch außen oder innen liegende Nuten unterteilt ist.

Fig. 1

EP 0 361 154 A2

## Rotor für eine bürstenlose Induktionsmaschine

Die Erfindung betrifft eine bürstenlose n-phasige und n-polige Induktionsmaschine, beispielsweise einen Tachogenerator , zum Erzeugen von Trapezspannungen mit einem Rotor der über den Umfang verteilte, um

$$\frac{360°\ \text{mech}}{n}$$

winkelversetzte, radial polarisierte Permanentmagnete und zugehörige Polschuhe aufweist.

Bekanntlich werden derartige Induktionsmaschinen zur Erzeugung von trapezförmigen Ausgangsspannungen in der Meß-, Regel- und Antriebstechnik eingesetzt, wo ein drehzahlproportionales Gleichspannungssignal zur Verfügung stehen soll. Die Ausgangsspannung wird in der Weise einer Gleichspannung angenähert, daß mehrere Trapezspannungen zeitlich versetzt induziert und durch eine elektronische Kommutierungsvorrichtung nacheinander eingeschaltet und aneinandergereiht werden. Die Gleichrichtung, d.h. das Herausgreifen des jeweils horizontalen Stückes der Trapezspannungen durch zeitlich nacheinander angesteuerte elektronische Schalter ist an sich bekannt.

Es werden große Anstrengungen unternommen, um Trapezspannungen zu erzeugen, deren Spannungsverlauf einen möglichst langen, konstant verlaufenden Anteil aufweist, da Abweichungen von der Geraden sich nach der Aneinanderreihung der Trapezstücke als Welligkeit bemerkbar machen.

Um einen möglichst waagrechten Spannungsverlauf der Trapezspannung zu erreichen, wird versucht, den aus den Permanentmagneten des Rotors austretenden Magnetfluß an den Polschuhen konstant zu halten, so daß beim Eintauchen eines Polschuhes in eine Induktionsspule der zeitliche Zuwachs des Magnetflußes ebenfalls konstant ist.

Zu diesem Zweck offenbart das DE-GM 83 24 702 einen Rotor mit abgeflachten Permanentmagneten bzw. Polschuhen. Die Magnete haben in der Magnetmitte eine geringere Dicke, wodurch sich in diesem Bereich eine Polabhebung ergibt. Durch diese Maßnahme soll der Magnetfluß über den Umfang des jeweiligen Magneten vergleichmäßigt und dem Nebenschluß zwischen zwei benachbarten Magneten entgegengewirkt werden. Die Abflachung der Magnete bzw. Polschuhe erfordert einen nicht unerheblichen Arbeitsaufwand und zusätzliche Fertigungsschritte.

Der Erfindung liegt die **Aufgabe** zugrunde, eine Induktionsmaschine der eingangs genannten Art anzugeben, welche auf einfache Weise und kostengünstig hergestellt werden kann und mit welcher Trapezspannungen mit besonders gleichmäßigen waagrechten Spannungsanteilen erzeugt werden können.

Die Aufgabe wird dadurch gelöst, daß jeder der n Pole aus jeweils m in Umfangsrichtung des Rotors winkelversetzt angeordneten, gleichartigen Permanentmagneten gleicher Polrichtung gebildet wird, und daß die nebeneinander angeordneten Permanentmagnete gleicher Polrichtung jeweils mit einem gemeinsamen Polschuh versehen sind.

Das Prinzip der Erfindung ist darin zu sehen, daß durch die Aufteilung eines jeden Poles auf mehrere Magnete und die dadurch zwischen den einzelnen Magneten jeweils gebildete Lücke gezielt Feldabschwächungen herbeigeführt werden können. Dieses Resultat wird durch bloße Aneinanderreihung von vorgefertigten Permanentmagneten erreicht und eine nachträgliche Formgebung und Oberflächenbearbeitung ist nicht erforderlich. Eine Quaderform der einzelnen Permanentmagnete ist ausreichend.

Es ist besonders vorteilhaft, daß pro Pol zwei Permanente gleicher Polrichtung (m = 2) vorhanden sind. Durch die Aufteilung eines jeden Pols auf zwei Magnete und die dadurch in der Mitte gebildete Lücke ergibt sich die Feldabschwächung im mittleren Bereich des Polschuhes.

Eine vorteilhafte Weiterbildung der Erfindung besteht ferner darin, daß die Permanentmagnete auf einem m • n-kantigen Träger, insbesondere einem 12-kantigen Träger, angeordnet sind. Hierbei ist die Montage besonders einfach, weil die einzelnen Permanentmagnete lediglich auf die Umfangsflächen des Trägers aufgesetzt zu werden brauchen, um die richtige radiale Ausrichtung und die gewünschte Lücke zwischen den Permanentmagnete-Gruppen gleicher Polung zu erhalten.

Es ist auch besonders vorteilhaft, daß die Polschuhe aus einem über die Permanentmagnete geschobenen Eisenring bestehen, der zwischen den einzelnen Polen mit radialen Einschnitten versehen ist.

Besonders einfach kann das Maß des Nebenschlusses zwischen den Magneten benachbarter Pole dadurch eingestellt werden, daß der Ring nicht vollständig aufgetrennt, sondern von innen oder von außen nur zum Teil geschlitzt wird. Durch die Schlitztiefe und/oder Schlitzbreite wird der Nebenschluß dosiert. Ein nicht ganz aufgeschlitzter Polschuh-Ring weist darüber hinaus den Vorteil auf, daß die auf die Magnete und die einzelnen Polschuhe ausgeübten Fliehkräfte gut aufgefangen werden. Daher sind die ansonsten üblichen konstruktiven Maßnahmen zur Aufnahme der Fliehkrafte - etwa Vergießen und/oder Bandagieren - nicht erforderlich. Dies läßt eine besonders kostengünstige Herstellung zu.

Ein paßgenauer, formschlüssiger Sitz der Polschuhe wird dadurch erreicht, daß der Eisenring in Übereinstimmung mit dem m · n-kantigen Träger der Permanentmagnete innenseitig mit einem m · nKantquerschnitt versehen wird. Dies kann besonders einfach mit einer m · n-Kanträumnadel ausgeführt werden. Für einen 12-Kantträger wird somit auch der Eisenring mit einem Innen-12-Kant versehen. Der Ring kann anschließend an den entsprechenden Stellen vollständig durchgetrennt werden, um einzelne Polschuhe zu ergeben oder aber nur mit Teilschlitzen versehen werden.

Besonders zweckmäßig ist es, daß innen liegende Teilschlitze vorgesehen sind, da die Schlitze in einem Arbeitsgang mit dem Innenprofil hergestellt werden können.

Die beiden vorstehend beschriebenen Maßnahmen, nämlich die Aufteilung in Teilmagnete pro Pol und der durch die Wahl der Schlitze dosierbare Nebenschluß führen dazu, daß die erzeugte Trapezspannung so eingestellt werden kann, daß der waagrechte Spannungsverlauf weder eine Ausbeulung nach oben noch eine Einbeulung nach unten erfährt und daß außerdem die Ecken der Spannungskurve scharf ausgebildet sind. Dies gewährleistet eine gute Überdeckung der zeitlich verschobenen Trapezspannungen, so daß aus den Teilspannungen eine Gleichspannung mit minimalem Oberwellengehalt zusammengesetzt werden kann. Versuche haben gezeigt, daß eine mit einem 6-poligen Rotor, d.h. mit 12 Magneten, die jeweils paarweise mit gleicher Polaritätsrichtung angeordnet sind, erzeugte Gleichspannung einen Oberwellenanteil von deutlich weniger als 1% aufweist.

Nachfolgend wird die Erfindung anhand von vier in der Zeichnung dargestellten Ausführungsbeispielen weiterbeschrieben:

Fig. 1 zeigt schematisch eine Seitenansicht eines 6-poligen ersten Rotos für eine bürstenlose Induktionsmaschine;

Fig. 2 zeigt schematisch eine Seitenansicht eines 6-poligen zweiten Rotors;

Fig. 3 zeigt schematisch eine Seitenansicht eines 6-poligen dritten Rotors und

Fig. 4 zeigt schematisch eine Seitenansicht eines 4-poligen vierten Rotors.

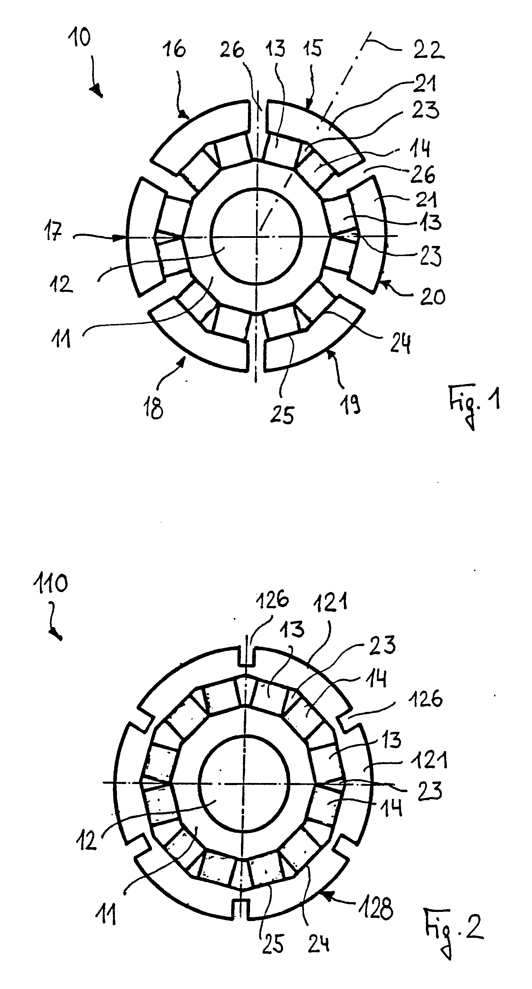

Der insgesamt mit 10 bezeichnete Rotor gemäß Fig. 1 besteht aus einem Polrad 11, das in dem hier wiedergegebenen Beispiel aus einem 12-Kant (n = 6: m = 2; n · m = 12) besteht, der sich auf einfache Weise aus einem handelsüblichen, stranggepreßten Sechskant ableiten läßt. Das Polrad 11 ist mit einer runden, mittigen Öffnung 12 zur Aufnahme einer Rotorwelle (nicht dargestellt) versehen. Auf dem Außenumfang des Polrads 11 sind n · m = 12 radial polarisierte Permanentmagnete 13,14 angeordnet, wobei jeder der Permanentmagnete 13,14 einer der zwölf Teilflächen des 12-Kants zugeordnet ist. In dem wiedergegebenen Beispiel bilden jeweils zwei Permanentmagnete 13,14 einen der sechs (n = 6) Pole 15,16,17,18,19 und 20. Jedem dieser Pole 15 bis 20 ist ein separater Polschuh 21 zugeordnet, welcher die zugehörigen Permanentmagnete 13,14 übergreift. Zwischen den einzelnen Polschuhen 21 befindet sich ein durchgehender Schlitz 26.

Es dürfte ersichtlich sein, daß anstelle des dargestellten Beispiels eines 6-poligen Rotors auch ohne weiteres andere Polzahlen, etwa n = 2, 4, 8 usw. mit mindestens jeweils zwei Permanentmagneten möglich ist. Anstelle der paarweisen Konfiguration, die sich als besonders vorteilhaft herausgestellt hat, können grundsätzlich auch mehr Magnete pro Pol angeordnet werden, wobei das Polrad dann mit entsprechend mehr Außenflächen versehen sein muß.

Die Permanentmagnete 13,14 sind quaderförmig ausgeformt. Sie sind achsensymmetrisch zur jeweiligen radial verlaufenden Polmittenlinie 22 ausgerichtet. Die Polmittenlinien 22 sind jeweils um

$$\underline{\frac{360° \ \text{mech}}{n}}$$

winkelversetzt. Die Polmittenlinien 22 verlaufen in dem hier dargestellten Beispiel jeweils durch eine Kante des Polrads 11.

Die Permanentmagnete 13,14 eines Poles weisen für sich jeweils die gleiche Polaritätsrichtung auf, wobei die Polfolge über den Umfang des Rotors 10 alterniert.

Aufgrund der Anordnung der Permanentmagnete 13,14 auf den 12-Kant-Teilflächen des Polrades 11 ergibt sich eine speichenartige Anordnung, die eine sich nach außen verbreiternde, keilförmige Lücke 23 zwischen den Permanentmagneten 13,14 der Pole 15 bis 20 zur Folge hat. Diese Lücke 13 hat jeweils eine Abschwächung des Magnetfeldes im mittleren Bereich zur Folge. Dies gilt sinngemäß für alle geradzeiligen Anordnungen von Permanentmagneten pro Pol. Die Abschwächung kann durch den Abstand der Permanentmagnete 13,14 beeinflußt werden, wobei der kleinste Abstand durch die Berührung der beiden Permanentmagnete 13 an ihren Fußpunkten an der Polmittenlinie 22 vorgegeben ist.

Die Polschuhe 21 weisen an ihren Innenseiten parallel zu den Teilflächen des Polrades 11 verlaufende ebene Teilflächen 24, 25 auf, mit welchen sie auf den betreffenden Permanentmagneten 13 bzw. 14 formschlüssig aufliegen. Die Polschuhe 21 können auf einfache Weise aus einem Eisenring hergestellt werden, der mit einer 12-Kant-Räumnadel mit einem Innen-Sechskant versehen und anschließend unter Bildung der Radialschlitze 26 aufgetrennt wird.

In den nachfolgend beschriebenen Figuren sind gleiche Teile mit gleichen Bezugzeichen versehen.

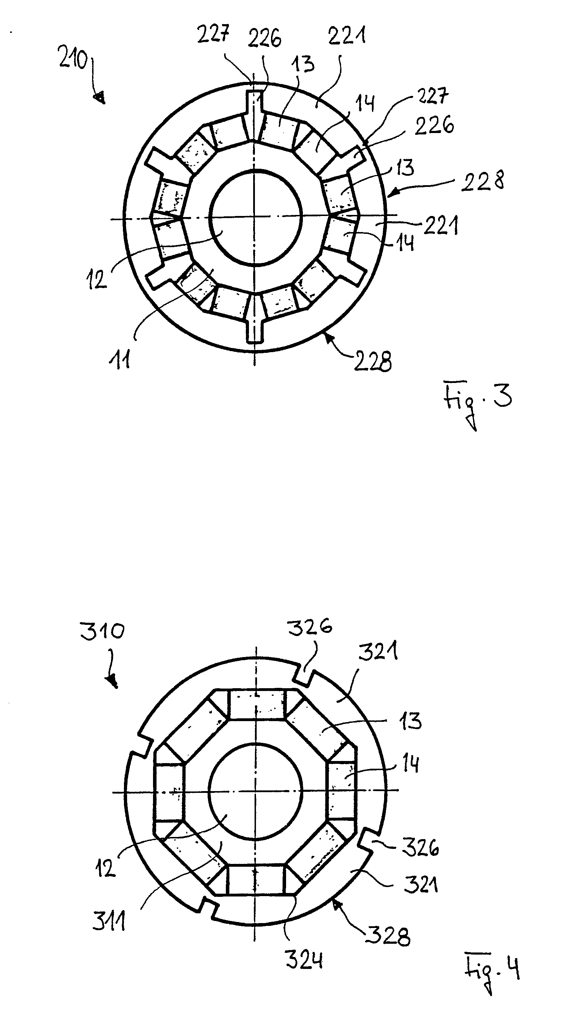

Der in Fig. 2 veranschaulichte zweite Rotor 110 unterscheidet sich von dem in Fig. 1 dargestellten Rotor 10 in der Ausbildung der Polschuhe 121 und der Radialschlitze 126 zwischen den einzelnen Polschuhen 121. Beim zweiten Rotor 110 trennen die Radialschlitze 126 die einzelnen Polschuhe 121 nicht vollständig. Vielmehr erfolgte nur eine teilweise Auftrennung von außen und es verbleibt im Innenbereich jeweils ein Nebenschluß. Durch die Schlitztiefe und -breite kann das Maß des Nebenschlusses benachbarter Magneten eingestellt werden.

Da die Polschuhe 121 insgesamt einen geschlossenen Ring 128 bilden, werden die Permanentmagneten 13,14 formschlüssig auf dem Polrad 11 gehalten, d.h. mit anderen Worten, der Rotor 110 ist selbsttragend ausgebildet.

Bei dem in Fig. 3 gezeigten Beispiel ist der Rotor 210 mit einem Eisenring 228 eingefaßt, welcher zur Bildung der Polschuhe 221 mit innen liegenden Radialschlitzen 226 versehen ist. Diese Radialschlitze 226 trennen - wie beim zweiten Rotor 110 gemäß Fig. 2 - die einzelnen Polschuhe 221 nicht vollständig voneinander. Die Radialschlitze 226 sind vielmehr in der Art von axial verlaufenden Nuten ausgebildet, so daß im Außenbereich Verbindungen 227 verbleiben, welche einen dosierten Nebenschluß erzeugen.

In Fig. 4 ist ein Beispiel für einen vierten Rotor 310 wiedergegeben, welcher 4-polig (n = 4) ausgebildet ist. Beim Polrad 311 handelt es sich demnach um einen Achtkant und der die Polschuhe 321 bildende Eisenring 328 ist mit einem Innen-Achtkant 324 versehen. Die einzelnen Polschuhe 321 sind durch außen liegende, in Achsrichtung verlaufenden, nutartigen Einschnitten 326 versehen.

Der erfindungsgemäße Rotor läßt sich auch sehr vorteilhaft bei einem Polrad-Lagegeber einsetzen, der mit Hallsensoren die jeweilige Pollage für die elektronische Gleichrichtung bzw. Kommutierung erfaßt.

**Ansprüche**

1. Rotor für eine bürstenlose n-phasige und n-polige Induktionsmaschine, beispielsweise ein Tachogenerator, zum Erzeugen von Trapezspannungen, der über den Umfang verteilte, um

$$\frac{360° \text{ mech}}{n}$$

winkelversetzte radial polarisierte Permanentmagnete und zugehörige Polschuhe aufweist,
dadurch **gekennzeichnet**,
daß jeder der n Pole (15 bis 20) aus jeweils m in Umfangsrichtung des Rotors (10,110,210,310) winkelversetzt angeordneten, gleichartigen Permanentmagneten (13,14) gleicher Polrichtung gebildet wird und daß die nebeneinander angeordneten Permanentmagnete (13,14) gleicher Polrichtung jeweils mit einem gemeinsamen Polschuh (21,121,221,321) versehen sind.

2. Rotor nach Anspruch 1,
dadurch **gekennzeichnet**,
daß pro Pol (15 bis 20) zwei Permanentmagnete (13,14) gleicher Polrichtung vorhanden sind.

3. Rotor nach einem der vorhergehenden Ansprüche,
dadurch **gekennzeichnet**,
daß die Permanentmagnete (13,14) auf einem m • n-kantigen Polrad (11) angeordnet sind.

4. Rotor nach Anspruch 3,
dadurch **gekennzeichnet**,
daß das Polrad (11) ein Zwölfkant ist.

5. Rotor nach einem der vorhergehenden Ansprüche,
dadurch **gekennzeichnet**,
daß die Polschuhe aus einem über alle Permanentmagnete (13,14) geschobenen Eisenring (128,228,328) bestehen, der zwischen den einzelnen Polen (15 bis 20) mit radialen Einschnitten (26,126,226,326) versehen ist.

6. Rotor nach anspruch 5,
dadurch **gekennzeichnet**,
daß der Eisenring (128,228 328) zwischen den einzelnen Polen (15 bis 20) nicht vollständig aufgetrennt ist.

7. Rotor nach anspruch 6,
dadurch **gekennzeichnet**,
daß die Einschnitte (126,326) als außen liegende, in Achsrichtung verlaufende Nuten ausgebildet sind.

8. Rotor nach Anspruch 6,
dadurch **gekennzeichnet**,
daß die Einschnitte (226) als innen liegende, in Achsrichtung verlaufende Nuten ausgebildet sind.

9. Rotor nach einem der Ansprüche 5 bis 8,
dadurch **gekennzeichnet**,
daß der Eisenring (128,228,328) mit einem innenseitigen m • n-Kantquerschnitt versehen ist.

10. Rotor nach einem der vorhergehenden Ansprüche,
dadurch **gekennzeichnet**,

daß er in einem mit Hall-Sensoren arbeitenden Rotorlagegeber eingesetzt wird.

Fig. 1

Fig. 2

Fig. 3

Fig. 4